Europäisches Patentamt

European Patent Office

Office européen des brevets

(11) Publication number: **0 128 752**
A2

# EUROPEAN PATENT APPLICATION

(21) Application number: 84303867.0

(22) Date of filing: 07.06.84

(51) Int. Cl.³: **G 06 K 7/10**, G 06 K 7/016

(30) Priority: 07.06.83 GB 8315600

(43) Date of publication of application: 19.12.84
Bulletin 84/51

(84) Designated Contracting States: **AT BE CH DE FR IT LI
LU NL SE**

(71) Applicant: **HORSTMANN GEAR GROUP LIMITED,
Newbridge Works, Bath BA1 3EF (GB)**

(72) Inventor: **Gale, Kenneth Charles, Norman House 123B
Richmond Park Road, Bournemouth Dorset BH8 8UA
(GB)**
Inventor: **Parsons, Laurence Edward, 60 Fontmell Road,
Broadstone Dorset BH8 8HP (GB)**

(74) Representative: **Williams, John Francis et al, J.F.
Williams & Co 34 Tavistock Street, London WC2E 7PB
(GB)**

(54) **Code reading arrangements.**

(57) A reference signal (16) and parallel data signals ($17_{1-8}$) are subject to similar variations in magnitude which are compensated by comparing each data signal (e.g. $17_1$) with a fixed proportion of a corresponding clock signal in a data pulse detector (61). To identify the arrival of a clock signal a clock pulse detector (60) compares the current reference input signal with a value proportional to the peak level of the preceding reference input signal. The proportion is determined by capacitors (C1, C2) and a potentiometer (VR1).

## Code Reading Arrangements

The present invention relates to an arrangement for reading codes, in particular those on coded identification members.

With certain forms of coding there can be a variation in the level of a signal produced by a reading head upon relative movement relative to a coded member. For example, there may be a variation in the level of detected signal dependent upon the relative speed of the reading head and the coded member. This can cause difficulties in determining whether a particular data bit should be   correctly read as a "1" or a "O". This determination can be effected by comparing the detected signal with a predetermined level, but there may be confusion between background noise and a relatively weak data input signal.

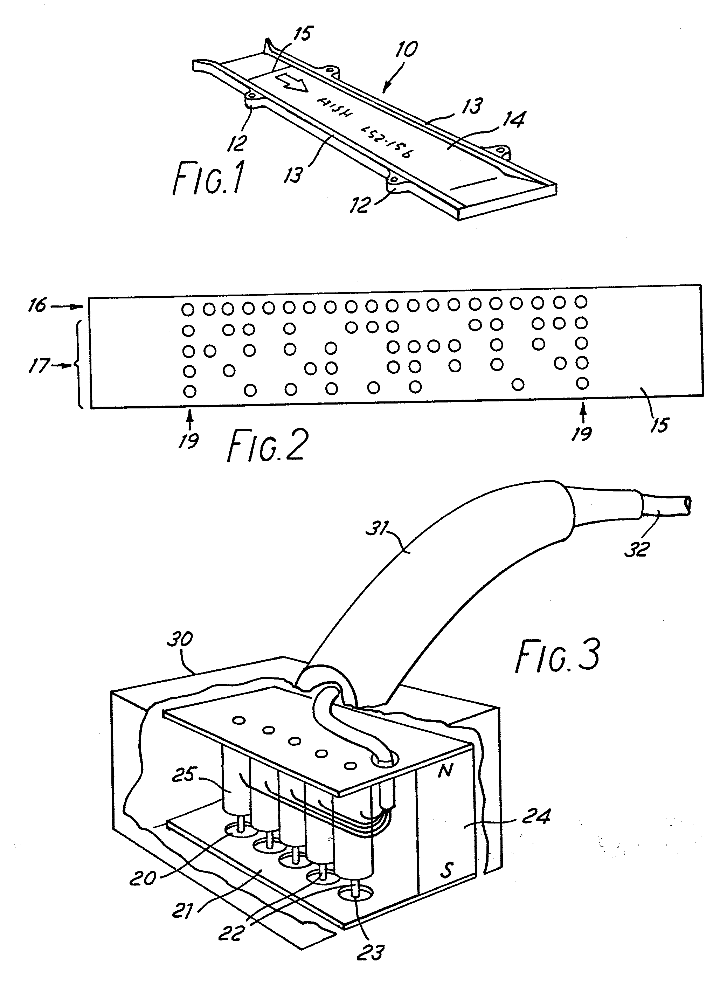

In Fig.1 of UK Patent Specification 1348681 there is disclosed an information read-out system in which marks on a recording medium are scanned to produce a reference signal Vc and information signals Vm.  Each Vm signal is compared with the reference signal Vc to give a corresponding signal Vo, which is stated to be independent of input signal strength.

A similar system is disclosed in U.K.  Patent Specification 854,525.

According to a first aspect of  the present invention there is provided   an arrangement for reading a coded member having a reference track and one or more data tracks, the arrangement comprising a reference track pulse input and one or more data track pulse inputs, and means for comparing the magnitude of a data track pulse signal, or a signal representative thereof, with the magnitude of a corresponding reference track pulse signal, or a signal representative thereof, the output of the comparing means being connected to data output means of the arrangement, characterised in that reference pulse detector means are provided for determining when a reference track pulse is present, said reference pulse detector means comparing the actual level of a current reference track pulse with a value proportional to the peak value of the preceding reference track pulse.

An advantage of the above arrangement is that it permits a form of automatic gain control to be used to set the reference pulse reading thresholds. This achieves the accommodation of a wide range of reading speeds and an associated wide range of voltage outputs from the reading head.

In a preferred arrangement the peak value of the preceding reference track pulse is stored on a first capacitor and at the end of the pulse a second capacitor is connected in parallel with the first capacitor by switching means controlled by logic means so as to reduce the voltage across the first capacitor to a predetermined fraction of the peak value, the first capacitor being connected to a first potentiometer which supplies a signal to a first input of said reference pulse detector means, and a signal representative of the actual level of the current reference track pulse is supplied to a second input of said reference pulse detector means. This provides a convenient and precise way of setting the reading threshold.

Preferably the reference track pulse signal is supplied to the first capacitor *via* rectifying means. This ensures that, after the voltage across the first capacitor has been reduced by the connection thereto of the second capacitor, it cannot fall further.

The reference and data tracks are preferably read magnetically; this method is less susceptible to the presence of dirt than photoelectric methods.

According to a second aspect of the present invention there is provided an arrangement for reading a series of pulses characterized in that it comprises means for comparing the actual level of a current pulse, or a signal representative thereof, with a signal proportional to the peak level attained by the preceding pulse in the series, or a signal representative thereof.

This provides a convenient way of evaluating the validity of each successive pulse of a train of pulses.

A preferred embodiment of the present invention will now be described by way of example only, with reference to the accompanying drawings, of which:

Fig.1 shows a coded identification member;

Fig.2 shows the coding layer of the member of Fig.1;

Fig.3 shows a reading head for the member of Fig.1;

Fig.4 shows a code reading arrangement in accordance with the present invention which receives code signals from the reading head of Fig.3; and

Fig.5 shows part of the arrangement of Fig.4 in greater detail.

Referring to Figure 1 of the drawings, an identification member 10 has pierced lugs 12 which allow it to be attached to an item to be identified. Guide edges 13 allow a reading head to be easily slid along from one end to the other, the edges 13 being splayed at the ends. The coding of the member is embodied in he body 14 of the member. This body incorporates a coding layer 15 of ferromagnetic material, as described with reference to Fig.2. The coding layer 15 is encapsulated in an inert, nonmagnetic layer. This may be done for example by potting in resin, by sandwiching between plastics layers and subjecting the sandwich to heat and pressure, or by injection moulding.

Referring to Figure 2 of the drawings, the coding layer or card 15 is in the form of a flat sheet of mild steel approximately 0.010 inches thick. Holes are punched in this sheet in 5-hole rows across the layer. The holes in one column 16 at one edge of the card are present in every row, and form a "clock" reference for the card reader. The holes in the other four positions 17 are absent or present according to the encoded information, each row representing 1 of 16 possible codes. In this particular application the card is approximately 45mm wide and columns of holes occur on 20mm centres, each hole being 6.5 mm dia. The punched sheet steel is sealed after punching between two sheets of 0.010 inches thick melinex. In this example, the layer has 18 data 'words', with identical end words 19 which are not part of the information carried. The end words would normally form part of the start/stop and error checking facilities ensuring high level of reading reliability. The sheet is punched by numerically controlled machinery in a continuous roll of material, or as precut label sized sheets. The plastic outer covering can be optically marked if required with information relating to the internal codes. The card can then be mounted as an identification member as in Fig.1 which also acts as a guide for the reading head.

Any coding system may be used and the holes can be circular, square or slots.

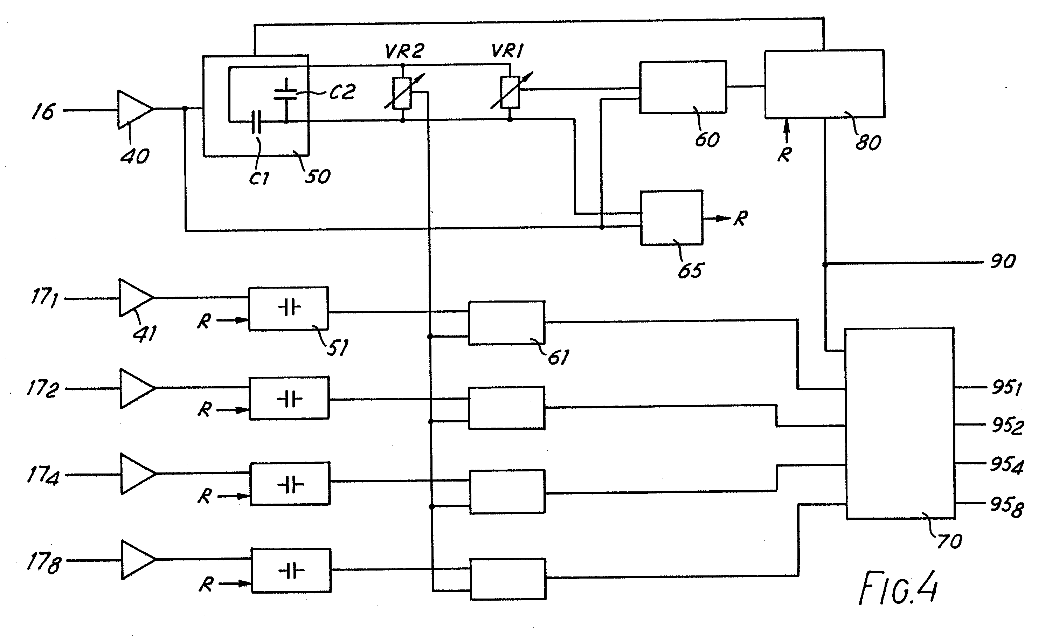

Figure 3 shows a reading head for use with an identification member as described. The head has a casing 30 with a handle 31 through which pass signal wires 32 to the code reading circuit of Figure 4. Holes 20 in a soft-iron shoe plate 21 are of the same diameter and at the same spacing as the columns 17 of the coding layer, and the tips 23 of soft iron pole pieces 22 are level with the bottom of the shoe plate 21. Permanent magnets 24 apply via these pole-pieces 22 a strong radial field across the shoe plate holes 20. This field is partially short-circuited when the shoe plate holes are over unpunched metal of the layer being read. As the layer and head move relative to each other, holes are encountered in the layer, and the resultant alternate decrease and increase in the flux density in the pole pieces 22 produce electrical pulse signals in sense coils 25. The magnitude of the signals depends on the relative speed of the member and the reading head. The polarity of the sense coils 25 is such that passing the sense head over a hole produces a positive induced e.m.f. followed by a negative one. These signals are supplied via wires 32 to the code reading circuit of Fig.4.

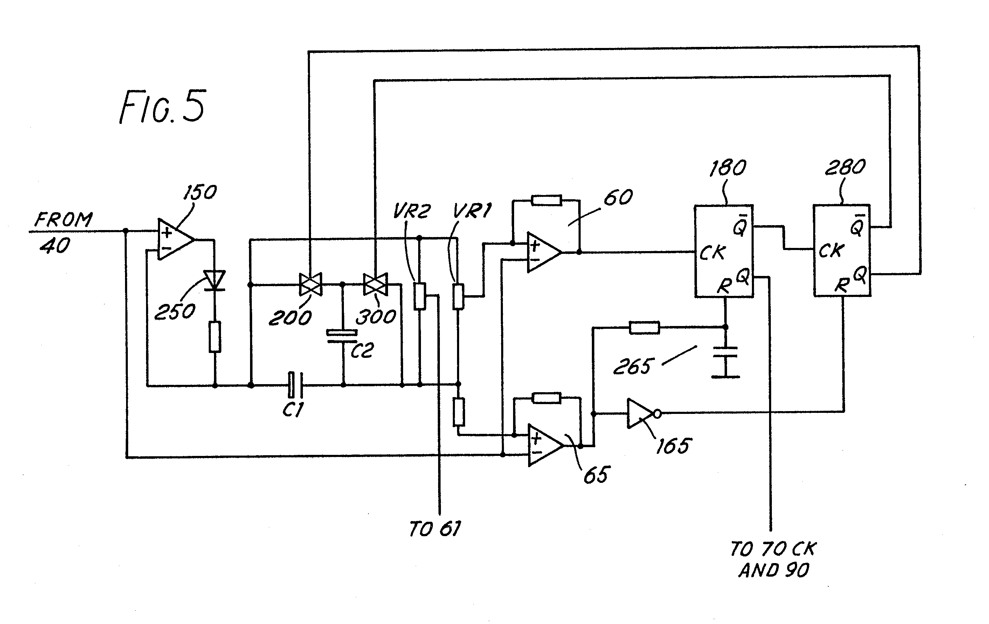

Figures 4 and 5 show a circuit for reading codes in accordance with the present invention. The circuit has five inputs $16, 17_1, 17_2, 17_4$ and $17_8$ corresponding to the five columns on coding layer 15. The circuitry associated with inputs $17_2$, $17_4$ and $17_8$ is similar to that associated with input $17_1$, and will not be described in detail.

The signals at inputs $16, 17_1$, are applied to respective non-linear amplifiers 40,41 which have a gain of 10 for induced input e.m.f.s. greater than a predetermined reference level and a gain of 1 for e.m.f.s. less than the reference level. The output of amplifier 40 is supplied to a clock track pulse sampler 50 which incorporates a first capacitor C1 for storing the clock pulse voltage and a second capacitor C2. The output of amplifier 40 is also applied to an input of a clock pulse detector 60. Outputs from sampler 50 are applied across potentiometers VR2 and VR1 each of which have a value of 100Kohm. An output from potentiometer VR1 is supplied to a second input of the clock pulse detector 60. A zero detector 65 is also connected to sampler 50 and is arranged to produce a reset signal R. The clock pulse detector 60 supplies an output to a pulse control logic circuit 80. Circuit 80 also receives the reset signal R from zero detector 65. Outputs of the logic circuit 80 are connected to the clock pulse sampler 50 and to a clock input of a data latch 70.

The output of amplifier 41 is supplied to the first input of a data track pulse sampler 51, the second input of which is the reset signal from zero detector 65. Data pulse sampler 51 incorporates a capacitor for storing the peak level attained by voltage $17_1$. The output of sampler 51 is connected to a first input of a data pulse detector 61, the second input of which is the output of potentiometer VR2. The output of the data pulse detector 61 is connected to a respective data input of the data latch 70, which has a corresponding data output $95_1$. The four data outputs $95_1$, $95_2$, $95_4$ and $95_8$ may be connected to a microprocessor or digital hardware for further processing and/or to an LCD or similar display. The data may also be stored for later transmission, e.g. over modem link to a main frame computer. Software and/or hardware checks are used for CRC and word-length checking so that errors caused, for example, by not completing the reading stroke are flagged and cause a warning device to sound.

In operation of the circuit movement of a hole in layer 15 past the clock sensing coil induces a speed-dependent voltage therein. Speed-dependent voltages are also induced in those sensing coil corresponding to data tracks 17 which also have a hole in the corresponding row. As the clock voltage caused by the hole rises above the predetermined reference level of non-linear amplifier 40 the reset input to the data pulse sampler 51 is removed. As the clock voltage rises, its level is stored on the first capacitor C1, and at the same time the capacitor in the data pulse sampler 51 stores the peak level attained by the respective data track sensing coil.

As the hole in clock track 16 passes the respective sensing coil, the voltage produced starts to fall. The peak level from the data track sampler 51 is compared in data detector 61 with a proportion (set by potentiometer VR2) of the clock track peak level. The condition "data hole present" or "data hole absent" is determined by the data track level being greater or less than this proportion respectively.

Latching of the output of detector 61 into the data latch 70 occurs when the clock track level falls below a proportion (set by potentiometer VR1) of its peak level. Latching is effected by logic circuit 80 supplying a data pulse to the clock input of data latch 70. The data pulse also appears at an output 90 of the circuit.

When the clock track voltage falls below·zero this is detected by detector 65. This applies reset signals R to the data sampler 51, which is thus reset to zero, and to the logic circuit 80 which causes removal of the data pulse and causes the discharge of the clock track voltage on C1 (i.e. the clock track peak level sample) to half its existing level by capacitor C2.

The way in which capacitors C1 and C2 and the associated logic circuitry function will now be described in greater detail with reference to Fig.5. The output of non-linear amplifier 40 is fed to an input differential amplifier 150 of the clock pulse sampler 50. By virtue of a diode 250 connected to the output of amplifier 150 the voltage on capacitor C1 can follow the input voltage upwards but not downwards. Capacitors C1 and C2, which are of equal value e.g. 10 microfarads, are interconnected via analogue switches 200,300. The logic circuitry 80 comprises two interconnected latch devices 180, 280 and the control inputs of the analogue switches 200,300 are connected to the Q and Q outputs of latch device 280, so that either switch 200 is on and switch 300 is off or switch 200 is off and switch 300 is on.

During sampling, switch 200 is off and C2 is shorted by switch 300. During this time C1 charges up to the clock peak level voltage. After sampling, switch 300 is off and switch 200 is on, which causes the voltage on C1 to be shared equally with C2; thus the voltage supplied to potentiometer VR1 falls to half the clock track peak level value. A fraction $\underline{k}$ of this half-value is compared at the clock pulse detector 60 with the clock input signal from amplifier 40. Thus detector 60 acts as a threshold device and is used to determine whether the next clock pulse is present or not.

In detail the logic circuitry functions as follows:

1)   Arrival of a clock pulse

As a pulse arrives, the input signal (from amplifier 40) rises through the "zero" level set by detector 65. In fact the zero level used corresponds to a small positive voltage. This causes the reset signal R applied, inter alia, to latch 180 to go from logic value 1 to logic value 0 (i.e high to low). This has no effect on latch 180 and removes the reset signal from the other system components. However, the reset input of latch 280, which is connected to zero detector 65 via an inverting amplifier 165, goes from 0 to 1 which causes the output Q of latch 280 to go low, which switches off analogue switch 200, and output Q of latch 280 to go high, which switches on analogue switch 300 and thus discharges capacitor C2.

At this time the charge on capacitor C1 is p/2 , where $\underline{p}$ is the clock track peak level voltage. Because of the connection of diode 250, the voltage across C1 does not fall below this value. The potentiometer VR1 supplies a voltage K x p/2     to an input of clock pulse detector 60, where $\underline{k}$ is less than 1.

2) Rise of clock pulse

As the clock pulse rises it first reaches the value k x p/2. When this occurs the output of clock pulse detector 60 goes low. This causes the clock input of latch 180 to go from 1 to 0, which has no immediate effect, but which prepares the clock input for a subsequent 0 to 1 transition.

The clock pulse next reaches the value p/2. The capacitor C1 then begins to charge up from p/2 to p, and the output of potentiometer VR1 correspondingly rises from K x p/2 to K x p.

3) Fall of clock pulse

As the clock pulse falls, the voltage across C1 remains constant at value p (because of diode 250) and the output of potentiometer remains constant at k x p. When the actual value of the clock pulse falls to the value of k x p, the output of clock pulse detector 60 goes high. This causes a 0 to 1 transition at the clock input of latch 180, which causes output Q to go high which causes latching of the data at 70. Output Q of latch 180 simultaneously goes low; this causes the clock input of latch 280 to go from 1 to 0 which has no immediate effect but which prepares the clock input for a subsequent 0 to 1 transition.

4) End of clock pulse

As the pulse finishes, the output signal falls through zero. This resets the various components of the system. The reset signal is withdrawn from the reset input of latch 280. The reset input of latch 180 is connected to the output of zero detector 65 by a circuit 265, (R = 10 Kohms, C = 0.01 microfarads), which introduces a small delay in the reset signal being applied to latch 180.

When the reset signal arrives, output Q of latch 180 goes low and output Q goes high which causes the clock input of latch 280 to go 0 to 1. This causes output Q of latch 280 to go high, which switches on switch 200 and output Q of latch 280 to go low which switches off switch 300. Thus the charge on capacitor C1 is shared equally between capacitors C1 and C2, i.e the voltage falls to $p/2$. The circuit is now ready to receive another clock pulse, (see step 1).

An advantage of the above described arrangement is that it takes into account the speed dependence of the data track voltages by comparing them with a clock track voltage which has the same speed dependence. The use in this way of the induced levels for the clock track as a reference for the data tracks ensures that a wide range of speeds may be covered from 0.5 ft/sec (15 cm/sec) to the fastest possible that the reaching head can be physically moved by a person over a coded member.

Since a bias oscillator is not required the layer 15 may be of any ferromagnetic material regardless of internal loss factor.

The above-described arrangement is especially suitable for reading coded members attached to stationary railway wagons, the reading head being moved manually across the coded member. Alternatively a fixed head may read coded members attached to wagons which are moving past.

In a modification of the above-described arrangement, capacitors C1 and C2 may have different values. In this case the above references to "half" the voltage level should be suitably modified. Preferably the values of

C1 and C2 do not differ by more than a factor of two.

Although the clock track 16 is at the edge in the coded member shown in Figs 1 and 2, it may, of course, be at any location across the member. In a preferred modification the clock track constitutes the central column of holes, since this provides the option of having a symmetrical label which can be read in any direction, upside down and/or back to front. The data holes do not need to be duplicated in this modification. Rather the final data-detecting means is capable of determining that the information has been received in a particular form (e.g. back-to-front) and, e.g. by suitable programming, processing the information correctly.

The use of holes in a ferromagnetic material is exemplary only and other methods of coding may be employed, for example magnetic bar coding. Moreover the invention is not limited to magnetic coding; for example it is envisaged that optical or capacitative coding and reading might be employed. Especially with these alternative methods of coding, the arrangement of the present invention has the advantage that the arrangement will still function if the coded member and/or the reading head are covered with a thin layer of dirt since the magnitudes of the reference and data track signals will be affected to a similar extent. With all methods of coding the arrangement of the present invention also similarly compensates for differences in the separation of successive coded members from the reading head.

## Claims

1.    An arrangement for reading a coded member having a reference track and one or more data tracks, the arrangement comprising a reference track pulse input (16) and one or more data track pulse inputs ($17_1$, - $17_8$), and means (61) for comparing the magnitude of a data track pulse signal, or a signal representative thereof, with the magnitude of a signal, or a signal representative thereof,   proportional to a corresponding reference track pulse signal the output of the comparing means being connected to data output means   (70) of the arrangement characterized in that reference pulse detector means (60) are provided for determining when a reference track pulse is present, said reference pulse detector means comparing the actual level of a current reference track pulse with a value proportional to the peak value(p) of the preceding reference track pulse.

2.    An arrangement according to claim 1, wherein the peak value(p) of the preceding reference track pulse is stored on a first capacitor (C1) and at the end of the pulse a second capacitor (C2) is connected in parallel with the first capacitor by switching means (200,300) controlled by logic means (280) so as to reduce the voltage across the first capacitor to a predetermined fraction (p/2) of the peak value, the first capacitor being connected to a first potentiometer (VR1) which supplies a signal (k x p/2) to a first input of said reference pulse detector means (60), and a signal representative of the actual level of the current reference track pulse is supplied to a second input of said reference pulse detector means.

3. An arrangement according to claim 2, wherein at the beginning of each reference track pulse said switching means (200,300) discharges the second capacitor (C2) but not the first capacitor (C1).

4. An arrangement according to claim 2 or 3 wherein the reference track pulse signal is supplied to the first capacitor (C1) _via_ rectifying means (250).

5. An arrangement according to any preceding claim wherein the reference track pulse input is connected to a reference pulse sampler (50) and each data track pulse input is connected to a respective data pulse sampler (51), the output of each data pulse sampler being connected to a first input of a respective data pulse detector (61) which compares the output of the data pulse sampler with a proportion of the output of the reference pulse sampler.

6. An arrangement according to claim 5 wherein said proportion is determined by a second potentiometer (VR2) connected to the output of the reference pulse sampler, an output of said second potentiometer being connected to a second input of each data pulse detector (61).

7. An arrangement according to any preceding claim wherein the outputs of the data pulse detectors (61) are connected to respective inputs of a data latch (70) which are simultaneously clocked by an output of a logic circuit (180).

8. An arrangement according to claim 7 wherein the logic circuit (180) has a clocking input connected to the reference pulse detector means (60).

9.    An arrangement according to any of claims 5 to 8 wherein an output of the reference pulse sampler (50) is connected to the input of a zero detector (65) which provides a reset signal for the apparatus.

10.    An arrangement for reading a series of pulses characterized in that it comprises means (60) for comparing the actual level of a current pulse, or a signal representative thereof, with a signal proportional to the peak level attained by the preceding pulse in the series, or a signal representative thereof.

FIG.1

15

10

13

13

12

12

14

HISH

9.51.251

FIG.2

16

17

19

19

15

15

FIG.3

31

32

30

25

24

N

S

20

21

22

23

FIG.4

0128752

FIG.5